Europäisches Patentamt

European Patent Office

Office européen des brevets

(11) Numéro de publication: **0 238 440**
**B1**

(12) FASCICULE DE BREVET EUROPEEN

(45) Date de publication du fascicule du brevet: **07.11.90**

(51) Int. Cl.⁵: **G 01 D 5/26**

(21) Numéro de dépôt: **87810118.7**

(22) Date de dépôt: **03.03.87**

(54) Capteur à fibre optique à microcourbures.

(30) Priorité: **06.03.86 CH 885/86**

(43) Date de publication de la demande:
**23.09.87 Bulletin 87/39**

(45) Mention de la délivrance du brevet:
**07.11.90 Bulletin 90/45**

(84) Etats contractants désignés:
**AT BE DE FR GB IT LU NL SE**

(56) Documents cités:

PATENT ABSTRACTS OF JAPAN, vol. 9, no. 83
(P-348)1806r, 12 avril 1985; & JP-A-59 211 820
PATENT ABSTRACTS OF JAPAN, vol. 7, no. 127
(P-201)1272r, 3 juin 1983; & JP-A-58 44 320
PATENT ABSTRACTS OF JAPAN, vol. 9, no. 72
(P-345)1795r, 2 avril 1985; & JP-A-59 203 930

(73) Titulaire: **CENTRE SUISSE D'ELECTRONIQUE ET
DE MICROTECHNIQUE S.A.
Maladière 71
CH-2000 Neuchâtel 7 (CH)**

(72) Inventeur: **Falco, Lucien G.
Rudebins 15
CH-2088 Cressier NE (CH)**
Inventeur: **Parriaux, Olivier M.
Place de la Palud 1
CH-1003 Lausanne VD (CH)**

(74) Mandataire: **Brulliard, Joel
c/o Centre Suisse d'Electronique et de
Microelectronique S.A. Maladière 71
CH-2000 Neuchâtel 7 (CH)**

Courier Press, Leamington Spa, England.

**Description**

La présente invention concerne, de manière générale, les capteurs à fibre optique et, plus particulièrement, les capteurs qui utilisent l'effet des microcourbures d'une fibre pour détecter une grandeur physique ou un paramètre d'environnement.

La technique de détection par fibre optique offre, par rapport aux techniques courantes, un grand nombre d'avantages parmi lesquels on peut citer: la compatibilité avec les systèmes de communication optique, l'insensibilité aux phénomènes électromagnétiques extérieurs et, de manière générale, l'aptitude à fonctionner dans un environnement sévère. Parmi les différents détecteurs à fibre optique, il existe une catégorie de détecteurs qui modulent l'intensité de la lumière transmise par une fibre en réponse à une variation de la grandeur à mesurer. Cette modulation d'intensité se traduit en fait par une variation de l'atténuation de la fibre. Un type de détecteur particulier appartenant à cette dernière catégorie est le détecteur à microcourbures dans lequel l'atténuation de la fibre est provoquée par une ondulation locale de l'angle de courbure de la fibre. Le brevet suisse CH 627 573 décrit un dispositif sensible à la pression du poids d'un corps exercée sur une fibre optique revêtue d'une gaine dont la surface interne est rugueuse. L'article de M. B. J. Diemeer et F. S. Trommel "Fiber-optic microbend sensor" paru dans Optics Letters, Vol. 9, No. 6 de juin 1984 et l'article de A. R. Mickelson et al intitulé "Backscatter readout from serial microbending sensors" et paru dans Journal of Lightwave Technology, Vol. LT-2, No. 5, de Octobre 1984, montrent des exemples de capteurs de force utilisant des plaques nervurées, ou mâchoires, pour provoquer, sur une fibre disposée entre ces mâchoires, des microcourbures lorsqu'une force est appliquée sur lesdites mâchoires. Dans les exemples mentionnés ci-dessus, les capteurs soit nécessitent des composants externes, tels les mâchoires, soit sont d'une fabrication difficile peu compatible avec les exigences industrielles. De plus, ces capteurs sont avant tout destinés à détecter l'application d'une force et sont, à priori, peu applicables pour détecter d'autres grandeurs, telles qu'un paramètre d'environnement.

Les documents "Patents Abstracts of Japan", vol. 9, No. 83 (P-348) [1806], 12 avril 1985; and JP—A—59 211 820 décrivent un capteur capable de produire des micro-courbures dans une fibre optique en réponse à une force externe. Ladite fibre optique comportant une gaine réalisée dans un premier matériau et revêtue d'un lubrifiant d'un second matériau est disposée dans un tube, d'un troisième matériau, comportant des discontinuités périodiques sur son pourtour. Lesdites discontinuités sont symétriques par rapport à l'axe de rotation de la fibre optique.

Les documents "Patent Abstracts of Japan", vol. 7, No. 127 (P-201) [1272], 3 juin 1983; and JP—A—58 44 320 décrivent un capteur à fibre optique capable de produire une courbure dans une fibre optique en réponse à une variation de température. Ladite fibre optique est fixée à deux lames métalliques réagissant à la variation de température en produisant des courbures.

Aussi un object de l'invention est un capteur à fibre optique capable de produire des microcourbures de la fibre et ne présentant pas les inconvénients mentionnés ci-dessus.

Un autre objet de l'invention est un capteur capable de détecter une grandeur physique.

Un autre objet de l'invention est un capteur capable de détecter une paramètre d'environnement.

Un autre objet de l'invention est un capteur ne nécessitant pas de composants externes.

Un autre objet de l'invention est un capteur permettant une fabrication en série.

Les caractéristiques de l'invention sont définies dans les revendications et décrites ci-après dans le cadre d'exemples d'applications particuliers, en référence aux dessins joints dans lesquels:

—la figure 1 montre un premier exemple de réalisation d'un capteur selon l'invention;

—la figure 2 montre un deuxième exemple de réalisation d'un capteur selon l'invention;

—la figure 3 est un diagramme illustrant la réponse du capteur à un signal d'activation;

—la figure 4 montre un premier système de détection incorporant un capteur de l'invention; et

—la figure 5 montre un deuxième système de détection incorporant un capteur de l'invention.

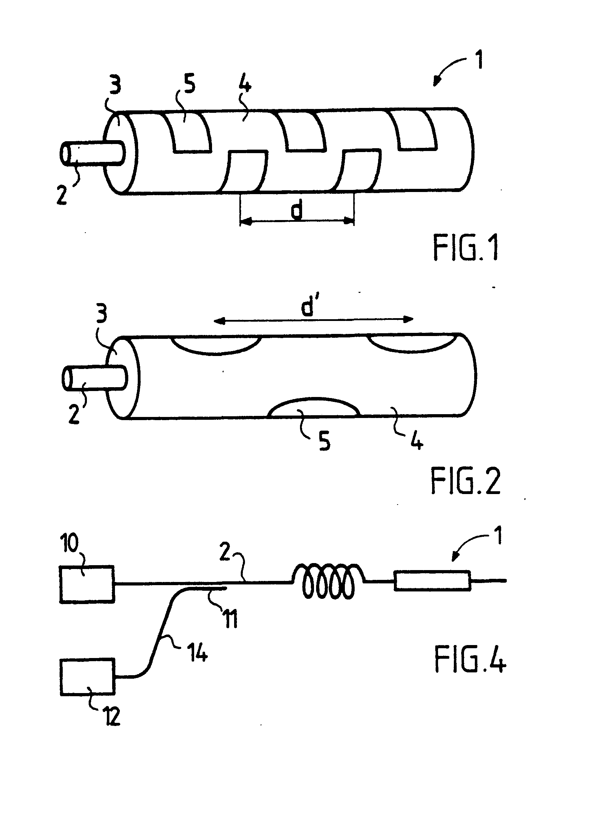

La figure 1 montre une vue partielle d'une première forme d'exécution du capteur de l'invention. Celui-ci est formé par une fibre optique 2 et sa gaine 3. La gaine comporte un revêtement 4 qui présente des discontinuités 5. Ces discontinuités 5 sont telles qu'elles présentent une périodicité "d" selon une direction longitudinale et une asymétrie circulaire selon un plan perpendiculaire. La fibre optique peut être de type multimode, monomode ou bimode. Dans le cas d'un capteur de température, la gaine pourra être constituée par une matière synthétique 3, telle le nylon, revêtue d'une couche métallique 4 de quelques dizaines de micromètres, par exemple de cuivre ou de nickel. Cette couche métallique est, par exemple, obtenue par dépôt chimique. Les discontinuités de la couche métallique peuvent êrre réalisées au moyens d'une attaque chimique, après dépôt d'une résine photosensible et exposition à travers un masque convenable. Le principe de fonctionnement d'un tel capteur est le suivant. Sous l'effet d'une variation de température, la différence des coefficients de dilatation des zones 4 et 5 de la surface extérieure de la fibre entraîne une déformation de la gaine et, par suite, de la fibre 2 sous la forme d'une ondulation (microcourbures) de périodicité égale à la périodicité "d" des discontinuités. La périodicité "d" est liée à la constante de propagation du ou des modes guidés par la fibre de manière que, pour ce ou ces modes, l'atténuation (ou le couplage entre modes) provoquée par les microcourbures soit maximum.

La structure du capteur de la figure 1 peut être avantageusement mise à profit pour détecter d'autres variations que celle de la température. Ainsi, si les zones 4 et 5 de la gaine sont réalisées dans des matériaux présentant, pour un paramètre d'environnement donné tel que l'humidité, des coefficients d'absorption différents, le capteur peut être utilisé comme capteur d'humidité. La même structure peut également être utilisée pour réaliser un détecteur d'intrusion. En effet, dès lors que les zones 4 et 5 présentent des rigidités différentes, une pression exercée sur la gaine par un corps quelconque aura pour effet d'induire des microcourbures au niveau du capteur.

La figure 2 montre une variante de réalisation du capteur de l'invention. Il convient de noter que la forme des zones 5 peut être dépendant de la technologie utilisée, attaque chimique ou attaque mécanique, et/ou de l'application envisagée.

La figure 4 montre un premier système de détection incorporant le capteur de l'invention. Un tel système dit OTDR ("Optical Time Domain Reflectometer"), comporte une source de lumière modulée par impulsions 10, une fibre optique 2, un capteur 1, un coupleur 11 et un circuit de détection 12. La fibre 2 peut être du type multimode ou du type monomode. Le capteur 1 est réalisé sur la fibre 2. Il est également possible d'avoir plusieurs capteurs répartis, de manière discrète, sur toute la longueur de la fibre ou même de réaliser le capteur sur toute la longueur de la fibre. Lorsque des microcourbures sont produits au niveau du capteur 1, une partie de la lumière en provenance de la source 10 est renvoyée vers la source (effet de rétrodiffusion ou "backscattering") et est appliquée au circuit de détection 12 via le coupler 11 et la fibre optique 14.

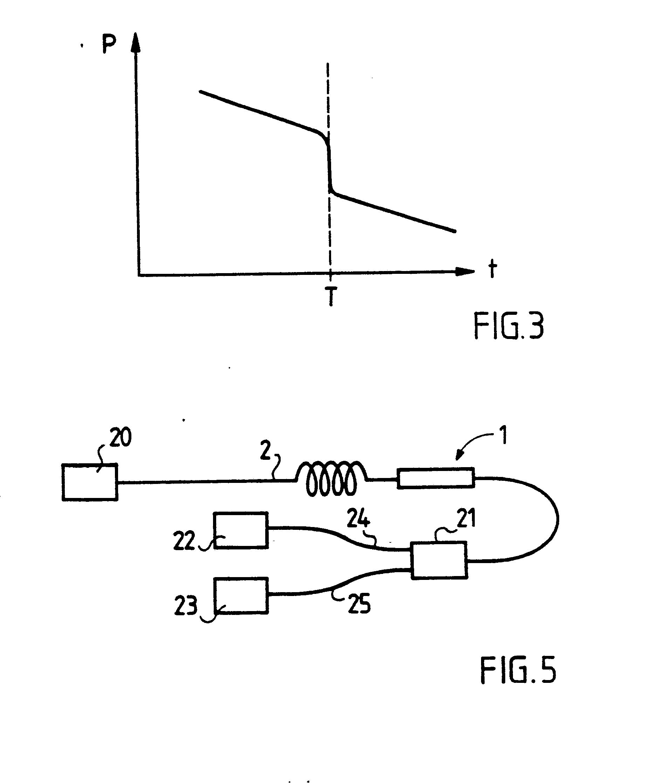

Comme illustré sur la figure 3 qui montre, en fonction du temps t, l'évolution de la puissance P du signal reçu suite à une perturbation au niveau du capteur, il est possible de détecter ladite perturbation. De même on conçoit aisément que, connaissant la réponse du capteur au paramètre d'environnement choisi et la vitesse de propagation du signal dans la fibre 2, on peut également mesurer la variation de ce paramètre et la localisation de la perturbation.

Dans les exemples précédents, on a mis à profit le fait que les microcourbures, induites au niveau du capteur par la variation d'un paramètre d'environnement, provoquaient un transfert d'énergie de modes guidés par la fibre vers des modes radiés à l'extérieur de la fibre. De manière globale, un tel phénomène se traduit par une perte de l'énergie transmise par la fibre. On peut, cependant, utiliser une autre caractéristique de ces capteurs à microcourbures, qui est de permettre un transfert d'énergie d'un mode guidé vers un autre mode guidé. Un exemple d'application utilisant une telle caractéristique est montré à la figure 5. La fibre 2 est du type bimodal et la source de lumière 20 est prévue pour émettre, dans la figure 2, deux signaux lumineux de modes différents ou de polarisations différentes. Ces deux signaux seront avantageusement modulés à fréquence moyenne (par exemple à fréquence radio). Le capteur 1 est du type décrit précédemment dont la période des discontinuités est adaptée pour permettre le transfert d'énergie d'un des modes transmis à l'autre. Le dispositif séparateur 21 assure la séparation des modes transmis à destination soit du détecteur 22, via la fibre 24, soit du détecteur 23, via la fibre 25. L'effet d'une perturbation au niveau du capteur 1 pourra être détecté soit par le détecteur 22, soit par le détecteur 23 ou encore par une comparaison des signaux délivrés par les deux détecteurs 22 et 23.

## Revendications

1. Capteur à fibre optique capable de produire des microcourbes dans une fibre optique en réponse à la variation d'un paramètre d'environnement, ladite fibre optique (2) étant enrobée dans une gaine (3) réalisée dans un premier matériau, et ladite gaine étant revêtue d'une couche (4) d'un second matériau caractérisé en ce que ladite couche présente deux rangées de discontinuités surfaciques selon une direction longitudinale à la fibre, lesdites discontinuités étant réparties périodiquement sur chaque rangée à une distance (d) les unes des autres et lesdites rangées étant symétriques, par rapport à l'axe de rotation de la fibre, mais décalées de part et d'autre dudit axe de rotation de la fibre de manière telle qu'une variation dudit paramètre d'environnement produise des microcourbures de même périodicité (d) que celles desdites discontinuités.

2. Capteur selon la revendication 1 et sensible à la variation de la température, caractérisé en ce que lesdits premier et second matériaux présentent des coefficients de dilatation différents.

3. Capteur selon la revendication 2, caractérisé en ce que ledit premier matériau est une matière plastique et en ce que ledit second matériau est un métal.

4. Capteur selon la revendication 1, caractérisé en ce que ledit second matériau est un métal et en ce que lesdites discontinuités sont obtenues par attaque mécanique dudit métal.

5. Capteur selon la revendication 1, caractérisé en ce que ledit second matériau est un métal et en ce que lesdites discontinuités sont obtenues par attaque chimique dudit métal.

6. Capteur selon la revendication 1 et sensible à l'humidité, caractérisé en ce que lesdits premier et second matériaux présentent des coefficients d'absorption différents.

7. Capteur selon la revendication 1 et sensible à la pression, caractérisé en ce que lesdits premier et second matériau présentent des rigidités différentes.

8. Capteur selon la revendication 1, caractérisé en ce que ladite fibre optique est une fibre monomode.

9. Capteur selon la revendication 1, caractérisé en ce que ladite fibre optique est une fibre multimode.

10. Capteur selon la revendication 1, caractérisé en ce que ladite fibre optique est une fibre bimode.

11. Capteur selon la revendication 1, caractérisé en ce que la périodicité desdites discontinuités est telle que les microcourbures, produites en réponse à une variation dudit paramètre d'environnement, entraînent un transfert d'énergie d'un ou plusieurs modes guidés par la fibre vers un ou plusieurs modes radiés à l'extérieur de ladite fibre.

12. Capteur selon la revendication 1, caractérisé en ce que la périodicité desdites discontinuités est telle que les microcourbures, produites en réponse à une variation dudit paramètre d'environnement, entraînent un transfert d'énergie d'un ou plusieurs modes guidés vers un ou plusieurs autres modes guidés par la fibre.

**Patentansprüche**

1. Faseroptischer Fühler, der in der Lage ist, in einer optischen Faser Mikrokrümmungen im Ansprechen auf eine Veränderung eines Umgebungsparameters zu erzeugen, welche optische Faser (2) von einer Hülle (3) aus einem ersten Material eingeschlossen ist, welche Hülle mit einer Schicht (4) eines zweiten Materials beschichtet ist, dadurch gekennzeichnet, daß die Beschichtung zwei Reihen von Oberflächendiskontinuitäten in einer Längsrichtung bezüglich der Faser aufweist, welche Diskontinuitäten periodisch in jeder Reihe mit einem Abstand (d) voneinander verteilt sind und die Reihen symmetrisch sind bezüglich der Drehachse der Faser, jedoch zueinander bezüglich der Drehachse der Faser derart versetzt sind, daß eine Veränderung des Umgebungsparameters Mikrokrümmungen gleicher Periodizität (d) wie jene der Diskontinuitäten erzeugt.

2. Fühler nach Anspruch 1 und empfindlich gegenüber der Veränderung der Temperatur, dadurch gekennzeichnet, daß die genannten ersten und zweiten Materialien unterschiedliche Dilatationskoeffizienten aufweisen.

3. Fühler nach Anspruch 2, dadurch gekennzeichnet, daß das erste Material ein Kunststoffmaterial ist und daß das zweite Material ein Metall ist.

4. Fühler nach Anspruch 1, dadurch gekennzeichnet, daß das zweite Material ein Metall ist und daß die Diskontinuitäten durch mechanischen Abtrag des Metalls erhalten werden.

5. Fühler nach Anspruch 1, dadurch gekennzeichnet, daß das zweite Material ein Metall und die Diskontinuitäten durch chemischen Abtrag des Metalls erzielt werden.

6. Fühler nach Anspruch 1 und empfindlich gegenüber Feuchtigkeit, dadurch gekennzeichnet, daß die ersten und zweiten Materialien unterschiedliche Absorptionskoeffizienten aufweisen.

7. Fühler nach Anspruch 1 und empfindlich gegenüber Druck, dadurch gekennzeichnet, daß die ersten und zweiten Materialien unterschiedliche Steifigkeit aufweisen.

8. Fühler nach Anspruch 1, dadurch gekennzeichnet, daß die optische Faser eine Monomodusfaser ist.

9. Fühler nach Anspruch 1, dadurch gekennzeichnet, daß die optische Faser eine Multimodusfaser ist.

10. Fühler nach Anspruch 1, dadurch gekennzeichnet, daß die optische Faser eine Bimodusfaser ist.

11. Fühler nach Anspruch 1, dadurch gekennzeichnet, daß die Periodizität der Diskontinuitäten derart ist, daß die Mikrokrümmungen, hervorgerufen im Ansprechen auf eine Veränderung des Umgebungsparameters einen Energietransfer eines oder mehrerer der von der Faser geführten Moden in Richtung einer oder mehrerer nach außen von der Faser abgestrahlter Moden mit sich bringt.

12. Fühler nach Anspruch 1, dadurch gekennzeichnet, daß die Periodizität der Diskontinuitäten derart ist, daß die Mikrokrümmungen, hervorgerufen im Ansprechen auf eine Veränderung des Umgebungsparameters einen Energietransfer eines oder mehrerer geführter Moden in Richtung eines oder mehrerer anderer Moden mit sich bringt, die von der Faser geführt werden.

**Claims**

1. A fiber-optic sensor for producing microbends in an optical fiber in response to variation of an environmental parameter, said optical fiber being embedded in a sheath made of a first material, said sheath being coated with a layer of a second material wherein said layer exhibits two lines of surface discontinuities according to a longitudinal direction of the fiber, said discontinuities being periodically distributed on each line at a distance d from each other and said lines being symmetrical according to the rotation axis of the fiber, but shifted on both sides of the rotation axis of the fiber whereby said first and second materials react in response to said environmental parameter in such a manner that a variation of said environmental parameter produces microbends of the same periodicity d as that of said discontinuities.

2. Sensor according to Claim 1, wherein said sensor is sensitive to a variation of temperature, and wherein said first and second materials exhibit differing coefficients of thermal expansion.

3. Sensor according to Claim 2, wherein said first material is made of a plastic material, and said second material made of a metal.

4. Sensor according to Claim 1, wherein said second material is made of a metal, and said discontinuities are obtained by mechanical attack of said metal.

5. Sensor according to Claim 1, wherein said second material made of a metal, and said discontinuities are obtained by chemical attack of said metal.

6. Sensor according to Claim 1, wherein said sensor is sensitive to humidity, and wherein said first and second materials exhibit differing coefficients of absorption of moisture.

7. Sensor according to Claim 1, wherein said sensor is sensitive to pressure, and wherein said first and second materials exhibit differing rigidities.

8. Sensor according to Claim 1, wherein said optical fiber is a monomode fiber.

9. Sensor according to Claim 1, wherein said optical fiber is a multimode fiber.

10. Sensor according to Claim 1, wherein said optical fiber is a bimode fiber.

11. Sensor according to Claim 1, wherein said periodicity of said discontinuities is such that the microbends produced in response to said variation of said environmental parameter involve a transfer of energy from at least one mode guided by said fiber to at least one mode radiated outside said fiber.

12. Sensor according to Claim 1, wherein said periodicity of said discontinuities is such that the microbends produced in response to said variation of said environmental parameter involve a transfer of energy from at least one mode guided by said fiber to at least one other mode guided by said fiber.

FIG.1

FIG.2

FIG.4

1

P

T

FIG.3

20 2 1 22 24 21 23 25

FIG.5